(19) Europäisches Patentamt / European Patent Office / Office européen des brevets

(11) **EP 3 933 232 B1**

(12) **EUROPEAN PATENT SPECIFICATION**

(45) Date of publication and mention
of the grant of the patent:
**25.10.2023 Bulletin 2023/43**

(21) Application number: **21177973.1**

(22) Date of filing: **07.06.2021**

(51) International Patent Classification (IPC):
**F16J 9/26** $^{(2006.01)}$

(52) Cooperative Patent Classification (CPC):
**F16J 9/26**

(54) **PISTON RING WITH HARD COATING**

KOLBENRING MIT HARTBESCHICHTUNG

SEGMENT DE PISTON AVEC REVÊTEMENT DUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.06.2020 DK PA202070391**

(43) Date of publication of application:
**05.01.2022 Bulletin 2022/01**

(73) Proprietor: **MAN Energy Solutions,
filial af MAN Energy Solutions SE, Tyskland
2450 Copenhagen SV (DK)**

(72) Inventor: **Fogh, Jesper Weiss
2000 Frederiksberg (DK)**

(74) Representative: **Nordic Patent Service A/S
Bredgade 30
1260 Copenhagen K (DK)**

(56) References cited:
**DE-A1-102010 047 836     DE-T5-112011 103 828
GB-A- 1 399 997     JP-A- S5 746 048
JP-A- 2002 332 561     JP-A- 2005 273 583
US-A- 4 256 318     US-A1- 2006 040 125**

## Description

TECHNICAL FIELD

The invention relates to a piston ring for use in a ring pack in a ring groove in a piston of a large two-stroke turbo-charged uniflow-scavenged internal combustion engine with crossheads, in particular a piston ring that is provided with a hard coating on the outer circumferential face.

BACKGROUND

Large two-stroke turbo-charged uniflow-scavenged engines with crossheads are typically used in propulsion systems of marine vessels or as the prime mover in power plants. Typically, these engines are operated with heavy fuel oil or marine diesel, or with gaseous fuel, for example, natural gas or petroleum gas.

The engine pistons are provided with a ring pack that seals against the combustion pressure in order to prevent combustion gases penetrating the scavenge space. In addition, the piston rings ensure cylinder oil is evenly distributed to form the lubricating film on the inner side of the cylinder liner. The piston rings in the ring pack seal a piston oscillating at a speed of approximately 10 m/sec for compressed air and combustion gasses at a pressure of around 250 bar pressure and a temperature of around 400 °C and using only a few drops of cylinder oil per engine revolution as lubrication, and all with an expected service life of many thousand hours. Therefore, the main requirements for piston rings are high 03241-EP resistance to wear and corrosion and a low drop in elasticity at high temperatures.

Due to the aggressive nature of the combustion gases created when operating with heavy fuel oil, the inner walls of the cylinder liners are lubricated with a special cylinder lubrication oil that protects the inner walls of the cylinder liners from the aggressive components of the combustion gases. The provision of the cylinder lubrication and the size of the components involved, like pistons with a diameter between 25 cm and 108 cm are the reason for the ring pack of a large two-stroke turbo-charged uniflow-scavenged engine to be different from ring pack in smaller four-stroke internal combustion engines. One major difference is the fact that the ring pack of a large uniflow-scavenged internal combustion engine needs to distribute the cylinder oil that is supplied through the cylinder liner, whilst the ring pack of smaller four-stroke internal combustion engines needs to ensure that the lubrication oil is scraped off the cylinder liner during the stroke of the piston towards bottom dead centre (BDC) to avoid lubrication oil ending up in the combustion chamber causing excessive lubrication oil consumption and undesirable combustion products from the lubrication oil in the combustion chamber. Accordingly, piston rings for four-stroke internal combustion engines have a sharp edge/transition between the outer circumferential surface and the side face that faces the crankshaft, to ensure the scraping effect. In contrast hereto the transition between the outer circumferential face and the side face that faces the crankshaft of a piston ring for a large two-stroke turbo-charged uniflow-scavenged internal combustion engine needs to be a rounded edge/transition to avoid scraping the cylinder oil from the inner surface of the cylinder liner during the stroke of the piston towards bottom dead center. Equally, the transition between the outer circumferential face in the side face that faces the combustion chamber needs to be rounded for the same reasons of distributing the cylinder oil over the cylinder liner, to thereby protect the cylinder liner. In both cases, the rounded transition has a funneling effect on the cylinder oil, i.e. the opposite of the scraping effect.

The ring pack of a large two-stroke turbo-charged uniflow-scavenged internal combustion engine with crossheads typically includes three or four piston rings. In particular, the top piston ring can be a Controlled Pressure Relief ring (CPR ring), i.e. the piston ring concerned or the groove in the piston concerned is provided with pressure relief grooves that allow for a well-defined and control flow of hot gas from the combustion chamber to the underside of the top piston ring thereby reducing the pressure drop over the top ring and distributing the load over several rings in the ring pack. Typically, the lowest piston ring is not a CPR ring i.e. is gas-tight. Further, in some large two-stroke turbo-charged uniflow scavenged internal combustion engines all of the piston rings are gas-tight, including the top ring, thereby rendering the lower piston rings more or less passive.

The peripheral outer side of the piston rings is coated with a hard coating that prolongs the lifetime of the piston rings and intended for reducing scuffing of the cylinder liner. However, ever-increasing pressures in the combustion chamber and new types of fuels, such as gaseous fuels, for example, natural gas place higher demands on the resistance to scuffing.

DE102010047836 discloses a piston ring produced by providing, on the radially outer circumferential surface of a ring-shaped metallic main body, a recess, the metallic main body having a radially outer circumferential surface, a radially inner circumferential surface, and flank surfaces interposed therebetween providing the recess with a contour that deviates from a cylindrical shape at least on the bottom of the recess, providing at least one wear-resistant layer on the outer circumferential surface, including the recess, and at least partially removing an area of the at least one wear-resistant layer on the outer circumferential surface and including an area corresponding to a scraping edge, thereby forming a land having a predefinable width. This piston ring is suitable for four-stroke internal combustion engines and is provided with a scraping edge transition between the outer circumferential surface and the side face that faces the crankshaft, to ensure the scraping effect.

## SUMMARY

It is an object to provide a piston ring that is suitable for use in in a piston ring pack in an annular ring groove in the sidewall of a piston of a large two-stroke turbocharged uniflow-scavenged internal combustion engine with crossheads, i.e. a piston ring without a scraping edge, that can overcome or at least reduce the problem indicated above.

The foregoing and other objects are achieved by the features of the independent claim.

Further implementation forms are apparent from the dependent claims, the description, and the figures.

According to a first aspect, there is provided a piston ring suitable for use in a piston ring pack in an annular ring groove in the sidewall of a piston of a large two-stroke turbocharged uniflow-scavenged internal combustion engine with crossheads to seal against the pressure in the combustion chamber, according to claim 1.

The inventors have realized that varying degrees ring twist, caused by the varying pressure during the load cycle and by different levels of engine load (mean effective pressure) is a major factor in the risk of scuffing. The inventors arrived at the insight that a hard coating over the full height of the ring (the full outer circumferential face) has the drawback that the desired barrel shape of the outer circumferential face is neither maintained nor achieved through wear of the outer circumferential face. Thus, the transitions between the outer circumferential face and the side faces become sharp due to wear and will cause the piston ring to scrape the cylinder oil film from the inner surface of the cylinder liner when the twist is high, e.g. due to high engine load and accordingly high pressures in the combustion chamber. Such scraping with the consequent removal of the cylinder oil film from the inner surface of the cylinder liner is likely to increase the risk of scuffing.

The inventors also arrived at the insight that it would be advantageous to ensure that the surface area of the peripheral outer face close to the transition to the side faces is less hard than a medial area of the peripheral outer face so that this less hard material will be removed by (abrasive) wear faster than the portion of the medial surface area of the peripheral outer face and the resulting receded transitions form together with the inner surface of the cylinder liner a wedge-shaped recess that acts as a funnel for the cylinder oil film on the inner side of the cylinder liner. The medial surface area in between the soft areas is hard coated to ensure durability of the piston ring, and assists in forming the above-mentioned wedge-shaped recess by the hard-coated area not wearing as easily as the less hard surface area of the outer circumferential face close to the transition to the side faces. The term "medial" in this context is "medial" as seen in the axial direction of the piston ring.

The material that forms the surface close to the transition to the side faces is of the same material as the material of the main ring body.

According to a possible implementation form of the first aspect, the first hardness is a Vickers hardness between 350 to 550 HV.

According to a possible implementation form of the first aspect, the second hardness is a Brinell hardness of 200 to 300 HB.

According to a possible implementation form of the first aspect, the medial portion extends over a hard height, and wherein the hard height is between 50 and 75% of the ring height.

According to a possible implementation form of the first aspect, the medial portion is formed by a hard coating.

According to a possible implementation form of the first aspect, the hard coating is applied to the ring body by spraying.

According to a possible implementation form of the first aspect, the largest radial thickness of the hard coating is between 1,5% and 4% of the ring height.

According to a possible implementation form of the first aspect, the hardness of the first- and second peripheral portions relative to the hardness of the medial portion is selected such that the surface of the first and second peripheral portions become, due to wear during use, receded relative to the surface of the medial portion.

According to a possible implementation form of the first aspect, the first- and second peripheral portions become receded during use relative to an imaginary curved extension of the radially bulging surface of the medial portion, the first-and second peripheral portions preferably being receded relative to the imaginary curved extension by a distance equaling 0,045% to 2% of the ring height.

According to a possible implementation form of the first aspect, a surface of the receded first- and second peripheral portions forms together with an inner wall of a cylinder liner an oil wedge guiding cylinder oil to the medial portion.

According to a possible implementation form of the first aspect, the first- and/or second side face is at least partially chromium plated.

According to a possible implementation form of the first aspect, the ring height is between 1,4 and 2,5 percent of the ring outer diameter.

According to a possible implementation form of the first aspect, the first hardness is at least 1,4 times greater than the second hardness, when measured by a Vickers/Brinell hardness test.

According to a possible implementation form of the first aspect, the medial portion together with the first- and second peripheral portions form the complete outer circumferential face.

According to a possible implementation form of the first aspect, the first hardness is substantially greater than the second hardness, preferably as measured by a Vickers hardness test.

According to a possible implementation form of the first aspect, the ring body is made of vermicular cast iron.

These and other aspects will be apparent from and the embodiments described below.

BRIEF DESCRIPTION OF THE DRAWINGS

In the following detailed portion of the present invention, the aspects, embodiments, and implementations will be explained in more detail with reference to the example embodiments shown in the drawings, in which:

> Fig. 1 is an elevated front view of a large two-stroke internal combustion engine according to an example embodiment,
> Fig. 2 is an elevated side view of the large two-stroke internal combustion engine of Fig. 1,
> Fig. 3 is a diagrammatic representation the large two-stroke internal combustion engine according to Fig. 1,
> Fig. 4 is a section through a segment of a piston fitted in a cylinder liner showing a ring pack with four piston rings,
> Fig. 5 on a larger scale, is a section of a piston fitted in a cylinder liner, showing a ring pack with four piston rings,
> Fig. 6 is a plane view of a piston top ring in a loaded condition,
> Fig. 7 is a side view of the top piston ring of Fig. 6,
> Figs. 8 and 9 show a side view and a top view, respectively, of a segment of the top piston ring of Fig. 6 in the area around a pressure relief groove,
> Fig. 10 is a plane view of a piston ring (not a top ring) in a loaded condition,
> Fig. 11 is a side view of the piston ring of Fig. 10,
> Fig. 12 is a cross-sectional view of an unused piston ring (top or regular) according to an embodiment as manufactured,
> Fig. 13 is a cross-sectional view of an unused piston ring according to an embodiment as manufactured (before wear), and
> Fig. 14 is a cross-sectional view of a used (worn) piston ring of Fig. 13.

DETAILED DESCRIPTION

In the following detailed description, an internal combustion engine will be described with reference to a large two-stroke low-speed turbocharged internal combustion engine with crossheads in the example embodiments.

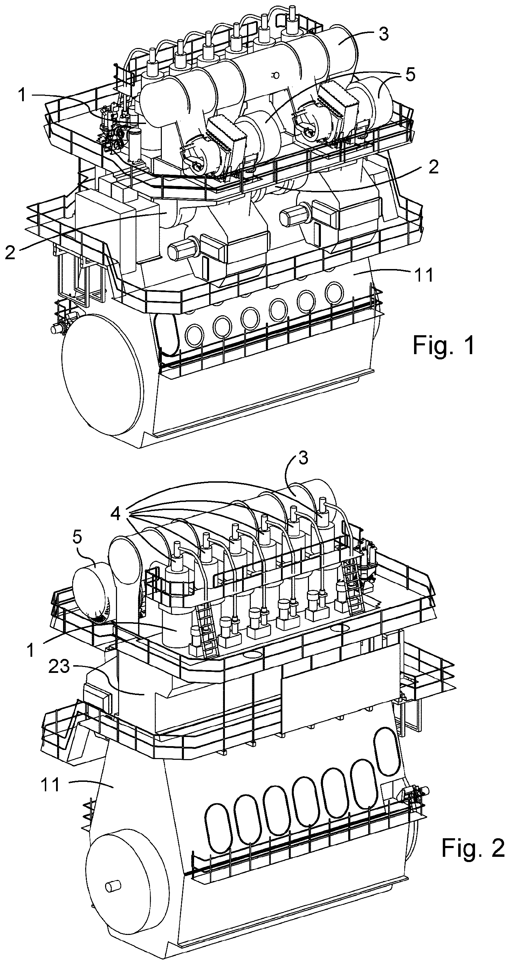

Figs. 1 and 2 are elevated views of a large low-speed turbocharged two-stroke internal combustion engine with a crankshaft 8 and crossheads 9. The engine can be operated with the Diesel (compression ignited) or the Otto cycle (timed ignition).

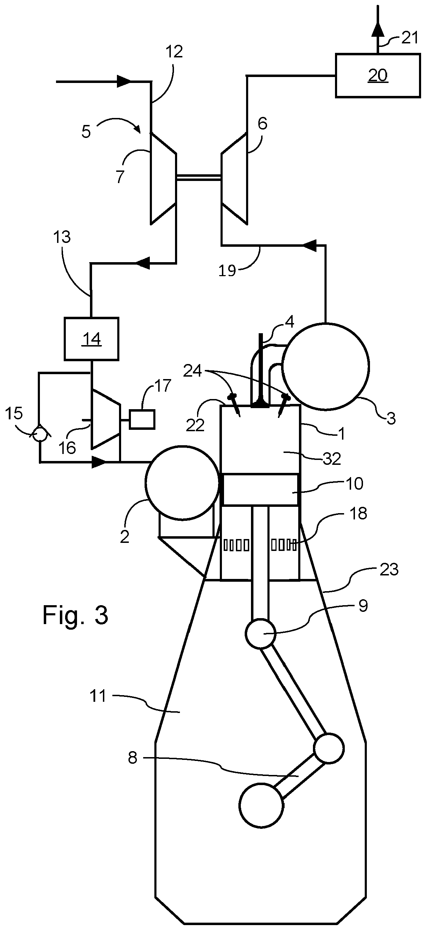

Fig. 3 shows a diagrammatic representation of the large low-speed turbocharged two-stroke internal combustion engine of Figs. 1 and 2 with its intake and exhaust systems. In this example embodiment, the engine has six cylinders in line. Large low-speed turbocharged two-stroke diesel engines have typically between four and fourteen cylinders in line, carried by a cylinder frame 23 that is carried by an engine frame 11. The engine may e.g. be used as the main engine in a marine vessel or as a stationary engine for operating a generator in a power station. The total output of the engine may, for example, range from 1,000 to 110,000 kW.

The engine is in this example embodiment a compression-ignited engine of the two-stroke uniflow type with scavenge air ports 18 at the lower region of the cylinder liners 1 and a central exhaust valve 4 at the top of the cylinder liners 1. The scavenge air is passed from the scavenge air receiver 2 to the scavenge air ports 18 of the individual cylinders 1. A piston 10 in the cylinder liner 1 compresses the scavenge air, fuel is injected into the combustion chamber 32 through fuel injection valves 24 in the cylinder cover 22, combustion follows, and exhaust gas is generated.

When an exhaust valve 4 is opened, the exhaust gas flows through an exhaust duct associated with the cylinder 1 into the exhaust gas receiver 3 and onwards through a first exhaust conduit 19 to a turbine 6 of the turbocharger 5, from which the exhaust gas flows away through a second exhaust conduit via an economizer 20 to an outlet 21 and into the atmosphere. Through a shaft, the turbine 6 drives a compressor 7 supplied with fresh air via an air inlet 12. The compressor 7 delivers pressurized scavenge air to a scavenge air conduit 13 leading to the scavenge air receiver 2. The scavenge air in conduit 13 passes an intercooler 14 for cooling the scavenge air.

The cooled scavenge air passes via an auxiliary blower 16 driven by an electric motor 17 that pressurizes the scavenge airflow when the compressor 7 of the turbocharger 5 does not deliver sufficient pressure for the scavenge air receiver 2, i.e. in low- or partial load conditions of the engine. At higher engine loads the turbocharger compressor 7 delivers sufficient compressed scavenge air and then the auxiliary blower 16 is bypassed via a non-return valve 15.

The engine is operated with a given fuel, such as, marine diesel, heavy fuel oil, (liquified) natural gas, coal gas, biogas, Methanol, Ethanol, Ethane, landfill gas, methane, ethylene or (liquified) petroleum gas (non-exhaustive list), that is supplied by a fuel supply system.

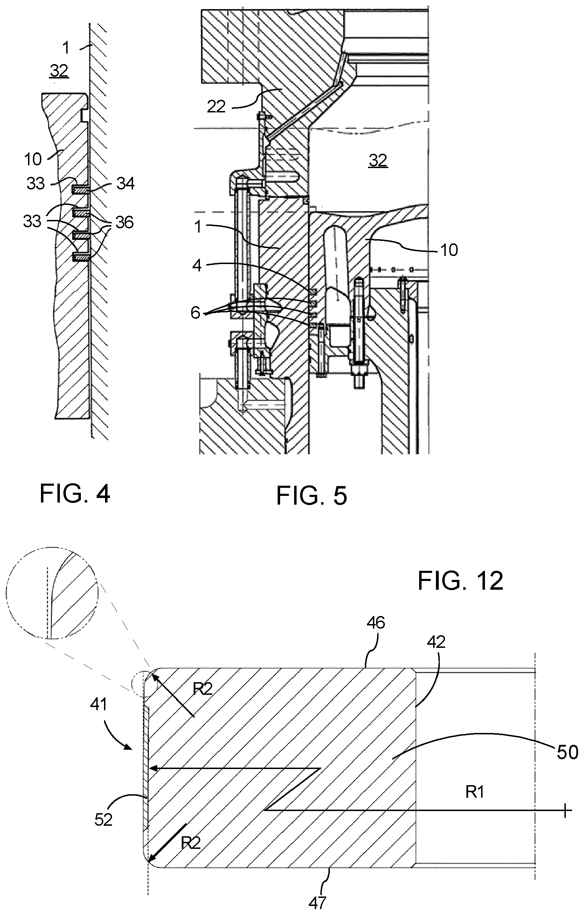

Figs. 4 and 5 show a piston 10, the cylindrical sidewall of which is provided with several ring grooves 33, of which the top groove 33 receives a piston top ring 34 and the lower piston rings 36 have been inserted in the lower grooves 33. The top piston ring 34 and the lower piston rings 36 of a single piston 10 form together a so-called ring pack of cooperating piston rings 34,36. The piston 10 is of the large two-stroke turbo-charged uniflow-scavenged engine with crossheads and the piston 10 defines together with the cylinder liner 1 and the cylinder cover 22 a combustion chamber 32 (it is noted that Fig. 5 does not show an exhaust valve in the cylinder cover 22 but it is understood that an exhaust valve will be present in the cylinder cover 22).

The piston rings 34,36 prevent the gas pressure in the combustion chamber 32 from penetrating to the space below the piston 1.

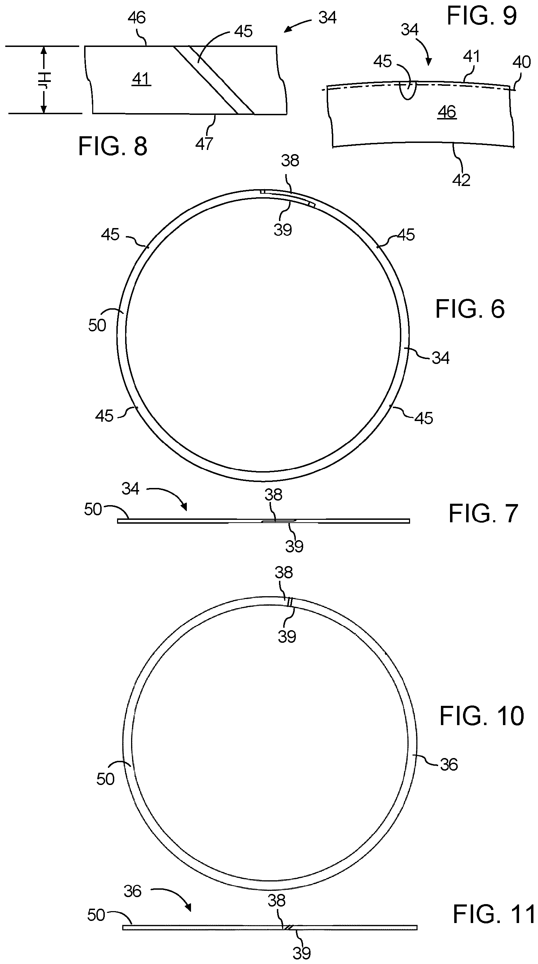

Figs. 6 and 7 illustrate an example embodiment of a top piston ring 34 with a ring partition which substantially prevents gas flow through the partition. The piston top ring 34 has a ring body 50 with a partition, which renders it possible partly to expand the ring diameter at the mounting in the ring groove 33, partly to permit two engaging end portions 38,39 of the top piston ring 34 to withdraw from each other as the top piston ring 34 gets worn during use.

The ring body 50 has first- and second side faces 46,47 axially distanced by a ring height Hr, an outer circumferential face 41 extending axially over the ring height Hr, and an inner circumferential face 42 extending axially over the ring height Hr. The first side surface 46 is intended to be facing the combustion chamber 32 and the second side surface 47 is intended to face away from the combustion chamber 32.

As shown in Figs. 8 and 9, the outer circumferential face 41 of the top piston ring 34 has in an embodiment pressure relief grooves 45, which extend obliquely at an angle in relation to the plane of the top piston ring 34. The pressure relief grooves 45 ensure a controlled gas flow from the top side to the lower side of the piston top ring 34, and thus a uniform and suitably delimited gas flow through the individual groove 45.

The outer rim of the ring groove 33 is indicated by an interrupted line 40. An outer circumferential face 41 of the top piston ring 34 is in contact with the inner surface of the cylinder liner 1.

In another embodiment, the top piston ring 34 is not provided with pressure relief grooves and the pressure relief function is e.g. provided by grooves in the piston (not shown). It is also possible to operate the top piston ring 34 without controlled leakage, i.e. a gas-tight top piston ring 34 that handles substantially the complete pressure difference over the piston 10.

Figs. 10 and 11 illustrate an example embodiment of a lower piston ring 36, with a ring partition formed by engaging end portions 38, 39. The lower piston ring 36 is essentially identical to the top piston ring 34, except for the presence of the pressure relief grooves in the top piston ring 34, and sometimes a different choice of material for the ring body 50, as set out in greater detail further below.

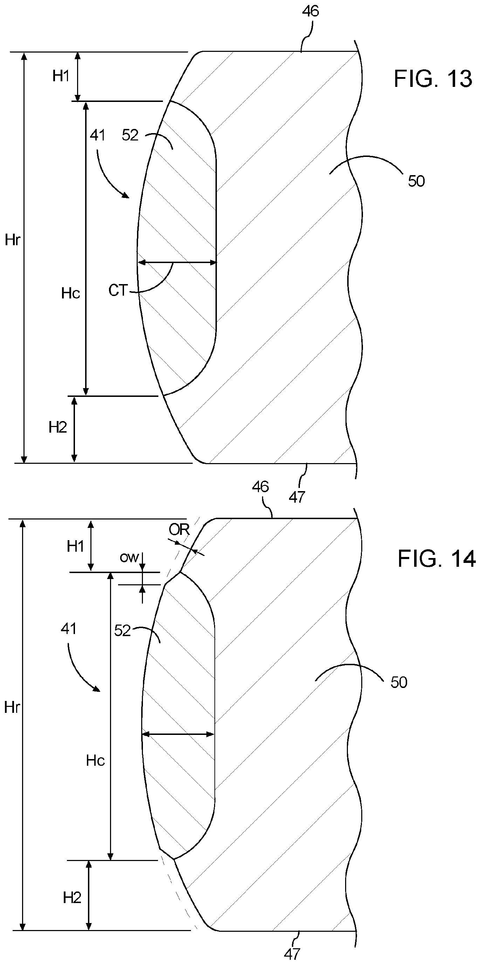

Fig. 12 shows a sectional detail of the (top or lower) piston ring 34, 36 of an unused (factory new) piston ring 34, 36. Fig. 13 illustrates a similar section of the piston ring 34, 36, with the convexity of the outer circumferential surface 41 substantially exaggerated for illustrative purposes.

The outer circumferential surface 41 has a symmetric convex running surface profile (when not yet used). According to the invention, the radius R1 of the curve describing the convexity of the peripheral surface 41 of an unused piston ring 34, 36 is 0,5 to 1,5 times the outer diameter of the piston ring. Thus, the outer circumferential face 41 bulges radially, with a first radius R1. The arrow illustrating the radius R1 in Fig. 12 is shown with a "zigzag" to indicate that the actual length of the arrow is larger than shown in Fig. 12, for the practical reason of fitting the arrow in the available area for the figure.

The medial portion of outer circumferential surface 41 is in an embodiment provided with a hard coating 52. Thus, the surface of the hard coating 52 is from factory convex with the radius R1. The thickness of the hard coating is indicated by the arrow CT. The extent of the height of the hard coating is indicated by arrow Hc.

From factory, the transition between the first side surface 46 and the outer circumferential surface 41 and between the second side surface 47 and the outer circumferential surface 41 are both rounded with a diameter R2, and R2 preferably corresponds to approximately 0,01 to 0,1 times the ring height Hr.

The medial portion of the axial extent of the outer circumferential face 41 has a first hardness (measured, for example with a Vickers hardness test).

A first peripheral portion of the axial extent of the outer circumferential face 41 that extends from the medial portion to the first transition has a second hardness (measured, for example with a Vickers hardness test). The first peripheral portion extends over a height H1.

A second peripheral portion of the extent of the outer circumferential face 41 that extends from the medial portion to the second transition has a second hardness (measured, for example with a Vickers hardness test). The second peripheral portion extends over a height H2. The first and second height H1, H2 are not necessarily identical in length. The surface of the first and second peripheral portion have the same hardness.

In an embodiment, the medial portion of the outer circumferential face 41 is formed by a hard coating 52, e.g. a thermal spray coating, galvanic coating, or other suitable hard coding. In another embodiment, the medial portion of the outer circumferential face is provided with the required hardness by surface treatment.

The first hardness is greater than the second hardness so that the medial portion wears out slower than the peripheral portions. Thus, it is ensured that the outer circumferential face 41 assumes the shape as shown in Fig. 14 after wear (Fig. 14 will be described in greater detail further below).

In an embodiment, the first hardness is a Vickers hardness between 350 to 550 HV. In an embodiment, the second hardness is a Brinell hardness of 200 to 300HB.

The medial portion extends over a hard height Hc. In an embodiment, the hard height Hc is between 50 and 75% of the ring height Hr.

In an embodiment, the largest radial thickness CT of the hard coating 52 is between 1,5% and 4% of the ring height Hr.

In an embodiment, the first peripheral portion extends axially over a height H1 and is formed by material of the ring body 50, and the second peripheral portion extends axially over a height H2 and is formed by material of the ring body 50.

In an embodiment, the hardness of the first- and second peripheral portions relative to the hardness of the medial portion is selected such that the surface of the first and second peripheral portions become, due to wear during use, receded relative to the surface of the medial portion.

In an embodiment, the surface of the receded first- and second peripheral portions forms together with an inner wall of a cylinder liner an oil wedge guiding cylinder oil towards the medial portion.

In an embodiment, the first- and/or second side faces 46, 47 are at least partially chromium plated.

The piston ring 34, 36 has an outer diameter in the range between 400 mm and 1000 mm. In an embodiment, the ring height Hr is between 1,4 and 2,5 percent of the ring outer diameter.

In an embodiment, the first hardness is at least 1,4 times greater than the second hardness, when measured by a Vickers/Brinell hardness test.

In an embodiment, the outer circumferential surface 41 has an asymmetric convex running surface profile.

Fig. 14 shows a piston ring 34, 36 after being used for a period of time. The first- and second peripheral portions have become receded during use relative to an imaginary curved extension (shown by the interrupted line in Fig. 14) of the radially bulging surface of the medial portion, the first- and second peripheral portions preferably being receded relative to the imaginary curved extension by a distance OR (oil Recess) equaling in an embodiment 0,045% to 2% of the ring height Hr.

At the transition between the medial portion and the first- and second peripheral portions, the medial portion has an edge covering a height OW (Oil Wedge), this edge being disposed at an angle to the remainder of the medial portion forming the relatively sharp transition from the medial portion to the first- and second peripheral portions. The receded first- and second portions together with the edge of the medial portion form an ideal profile for guiding cylinder oil towards the main section of the medial portion, thereby ensuring that there is no scraping of the cylinder oil, also with varying ring twist.

Thus, the surface of the first and second peripheral portion being softer than the surface of the medial portion results in the piston ring 34, 36 achieving an ideal shape to reduce the risk of scraping and thereby reduce the risk of scuffing of the cylinder liner 1.

In an embodiment, the material hardness of the surface of the ring body 50 at the peripheral portions is 10>HVB/HVA > 1.4

In an embodiment, the material hardness of the surface of the medial portion is 500>HVB>5000.

In an embodiment, the dimensions after wear in relation to Hr are:

$$2\% > OW > 7\%$$

$$0.045\% > OR > 2\%$$

$$1.5\% > CT > 4\%$$

$$50\% > Hc > 80\%$$

Typically, all piston rings 34,36 in a ring pack are manufactured to be slightly non-circular. This non-circular form is required so that the piston ring exerts an exactly defined pressure over the whole ring circumference when inserted in the circular cylinder liner 1. This pressure can in principle be distributed evenly over the circumference; however, a negative oval form is generally aimed for in a top piston 34 for use in a piston 10 of a large two-stroke turbocharged uniflow-scavenged internal combustion engine. This means that the pressure in the area of the partition is lower than on the remaining circumference which avoids increased pressure on the partition during operation of the engine.

In an embodiment, the main body of the top piston ring 34 is a temper-hardened casting with inclusions of vermicular graphite for use in the first groove, while in the lower grooves, the main body of the piston rings is of an alloyed grey cast iron, for example, vermicular cast-iron. In another embodiment, the main body of all of the piston rings of a ring pack is of vermicular cast-iron.

In an embodiment, a ring pack comprises:

- a top ring: asymmetrically barreled, twin layer coated, a portion of the height of side face chromium coated,
- a 2nd ring asymmetrically barreled, running-in coated, side face chromium coated,
- a 3rd ring asymmetrically barreled, running-in coated, and
- a 4th ring asymmetrically barreled, twin layer coated.

In another embodiment, a ring pack comprises:

- a top ring: asymmetrically barreled, side face chrome ceramic coated,
- lower rings: asymmetrically barreled, chrome ceramic coated.

The various aspects and implementations have been described in conjunction with various embodiments herein. However, other variations to the disclosed embodiments can be understood and effected by those skilled in the art in practicing the claimed subject-matter, from a study of the drawings, the disclosure, and the appended claims. In the claims, the word "comprising" does not exclude other elements or steps, and the indefinite article "a" or "an" does not exclude a plurality.

The reference signs used in the claims shall not be construed as limiting the scope. Unless otherwise indicated, the drawings are intended to be read (e.g., cross-hatching, arrangement of parts, proportion, degree, etc.) together with the specification, and are to be considered a portion of the entire written description of this disclosure.

## Claims

1. A piston ring (34,36) for use in a piston ring pack in an annular ring groove (33) in the sidewall of a piston (10) of a large two-stroke turbocharged uniflow-scavenged internal combustion engine with crossheads to seal against the pressure in the combustion chamber (32), said piston ring (34,36) comprising:

   a ring body (50) having:

   first- and second side faces (46,47) axially distanced by a ring height (Hr),
   an outer circumferential face (41) extending axially over said ring height (Hr),
   an inner circumferential face (42) extending axially over said ring height (Hr), and
   first- and second engaging end portions (38,39) at a ring partition that allows expansion and contraction of said piston ring (34,36),

   a first transition between said outer circumferential face (41) and said first side face (46) being rounded,
   a second transition between said outer circumferential face (41) and said second side face (47) being rounded,
   a medial portion of the axial extent of said outer circumferential face (41) having a first hardness,
   a first peripheral portion of the axial extent of said outer circumferential face (41) that extends from said medial portion to said first transition having a second hardness,
   a second peripheral portion of the extent of said outer circumferential face (41) that extends from said medial portion to said second transition having said second hardness, said first hardness being greater than said second hardness,
   wherein said first peripheral portion extends axially over a first height (H1) and is formed by material of the ring body (50), and said second peripheral portion extends axially over a second height (H2) and is formed by material of the ring body (50),
   wherein said piston ring (34, 36) has an outer diameter in the range between 400 mm and 1000 mm, and
   wherein said outer circumferential face (41) bulges radially with a first radius (R1) that is 0,5 to 1,5 times the outer diameter of the piston ring (34, 36).

2. A piston ring (34, 36) according to claim 1, wherein said medial portion extends over a hard height (Hc), and wherein said hard height (Hc) is between 50 and 75% of said ring height (Hr).

3. A piston ring (34, 36) according to any one of claims 1 to 2, wherein said medial portion is formed by a hard coating (52).

4. A piston ring (34, 36) according to claim 3, having a sprayed hard coating (52) on the ring body (50).

5. A piston ring (34, 36) according to claim 3 or 4, wherein the largest radial thickness (CT) of said hard coating is between 1,5% and 4% of the ring height (Hr) of the piston ring (34, 36).

6. A piston ring (34, 36) according to any one of claims 1 to 5, wherein said first- and/or second side face (46, 47) is at least partially chromium plated.

7. A piston ring (34, 36) according to any one of claims 1 to 6, wherein the ring height (Hr) is between 1,4 and 2,5 percent of the ring outer diameter.

8. A piston ring (34, 36) according to any one of claims 1 to 7, wherein said first hardness is at least 50 times greater than said second hardness, when measured by a Vickers hardness test.

9. A piston ring (34, 36) according to any one of claims 1 to 8, wherein said first hardness is a Vickers hardness between 350 to 550 HV.

10. A piston ring (34, 36) according to any one of claims 1 to 9, wherein said second hardness is a Brinell hardness of 200 to 300 HB.

## Patentansprüche

1. Kolbenring (34, 36) zur Verwendung in einem Kolbenringpaket in einer Ringnut (33) in der Seitenwand eines Kolbens (10) einer großen längsgespülten Zweitakt-Brennkraftmaschine mit Turbolader mit Kreuzköpfen zum Abdichten gegen den Druck im Brennraum (32), wobei der Kolbenring (34, 36) umfasst:

einen Ringkörper (50), welcher aufweist:

eine erste und eine zweite Seitenfläche (46, 47), die um eine Ringhöhe (Hr) axial beabstandet sind,
eine äußere Umfangsfläche (41), die sich axial über die Ringhöhe (Hr) erstreckt,
eine innere Umfangsfläche (42), die sich axial über die Ringhöhe (Hr) erstreckt, und
einen ersten und einen zweiten Eingriffsendabschnitt (38, 39) an einer Ringteilung, welche eine Expansion und Kontraktion des Kolbenrings (34, 36) ermöglicht,

wobei ein erster Übergang zwischen der äußeren Umfangsfläche (41) und der ersten Seitenfläche (46) abgerundet ist,
wobei ein zweiter Übergang zwischen der äußeren Umfangsfläche (41) und der zweiten Seitenfläche (47) abgerundet ist,
wobei ein mittlerer Abschnitt der axialen Erstreckung der äußeren Umfangsfläche (41) eine erste Härte aufweist,
wobei ein erster Umfangsabschnitt der axialen Erstreckung der äußeren Umfangsfläche (41), welcher sich vom mittleren Abschnitt bis zum ersten Übergang erstreckt, eine zweite Härte aufweist,
wobei ein zweiter Umfangsabschnitt der Erstreckung der äußeren Umfangsfläche (41), welcher sich vom mittleren Abschnitt bis zum zweiten Übergang erstreckt, die zweite Härte aufweist,
wobei die erste Härte größer als die zweite Härte ist,
wobei der erste Umfangsabschnitt sich axial über eine erste Höhe (H1) erstreckt und von Material des Ringkörpers (50) gebildet wird und der zweite Umfangsabschnitt sich axial über eine zweite Höhe (H2) erstreckt und von Material des Ringkörpers (50) gebildet wird,
wobei der Kolbenring (34, 36) einen Außendurchmesser im Bereich zwischen 400 mm und 1000 mm aufweist und
wobei sich die äußere Umfangsfläche (41) mit einem ersten Radius (R1), welcher gleich dem 0,5- bis 1,5-Fachen des Außendurchmessers des Kolbenrings (34, 36) ist, radial ausbaucht.

2. Kolbenring (34, 36) nach Anspruch 1, wobei sich der mittlere Abschnitt über eine harte Höhe (Hc) erstreckt und wobei die harte Höhe (Hc) zwischen 50 und 75 % der Ringhöhe (Hr) beträgt.

3. Kolbenring (34, 36) nach einem der Ansprüche 1 bis 2, wobei der mittlere Abschnitt von einer harten Beschichtung (52) gebildet wird.

4. Kolbenring (34, 36) nach Anspruch 3, welcher eine aufgespritzte harte Beschichtung (52) auf dem Ringkörper (50) aufweist.

5. Kolbenring (34, 36) nach Anspruch 3 oder 4, wobei die größte radiale Dicke (CT) der harten Beschichtung zwischen 1,5 % und 4 % der Ringhöhe (Hr) des Kolbenrings (34, 36) beträgt.

6. Kolbenring (34, 36) nach einem der Ansprüche 1 bis 5, wobei die erste und/oder die zweite Seitenfläche (46, 47) wenigstens teilweise verchromt sind.

7. Kolbenring (34, 36) nach einem der Ansprüche 1 bis 6, wobei die Ringhöhe (Hr) zwischen 1,4 und 2,5 Prozent des Ringaußendurchmessers beträgt.

8. Kolbenring (34, 36) nach einem der Ansprüche 1 bis 7, wobei die erste Härte mindestens 50-mal größer als die zweite Härte ist, wenn mittels einer Härteprüfung nach Vickers gemessen wird.

9. Kolbenring (34, 36) nach einem der Ansprüche 1 bis 8, wobei die erste Härte eine Vickershärte zwischen 350 und 550 HV ist.

10. Kolbenring (34, 36) nach einem der Ansprüche 1 bis 9, wobei die zweite Härte eine Brinellhärte von 200 bis 300 HB ist.

**Revendications**

1. Segment de piston (34, 36) destiné à une utilisation dans un pack de segment de piston dans une gorge de piston (33) dans la paroi d'un piston (10) d'un grand moteur à combustion interne à deux temps à balayage continu doté de crosses pour assurer l'étanchéité contre la pression dans la chambre de combustion (32), ledit segment de piston (34, 36) comprenant :

un corps de segment (50) comportant :

des premières et seconde faces latérales (46, 47) à distance axiale d'une hauteur de segment (Hr),
une face circonférentielle extérieure (41) s'étendant axialement sur ladite hauteur de segment (Hr),
une face circonférentielle intérieure (42) s'étendant axialement sur ladite hauteur de segment (Hr), et
des première et seconde sections terminales d'engagement (38, 39) au niveau d'une séparation de segment qui permet l'expansion et la contraction dudit segment de piston (34, 36),

une première transition entre ladite face circonférentielle extérieure (41) et ladite première face latérale (46) étant arrondie,
une seconde transition entre ladite face circonférentielle extérieure (41) et ladite seconde face latérale (47) étant arrondie,
une section médiane de l'extension axiale de ladite face circonférentielle extérieure (41) ayant une première dureté,
une première section périphérique de l'extension axiale de ladite face circonférentielle extérieure (41) qui s'étend de ladite section médiane à ladite première transition ayant une seconde dureté,
une seconde section périphérique de l'extension de ladite face circonférentielle extérieure (41) qui s'étend de ladite section médiane à ladite seconde transition ayant ladite seconde dureté,
ladite première dureté étant supérieure à ladite seconde dureté, ladite première section périphérique s'étendant axialement sur une première hauteur (H1) et étant formée par le matériau du corps de segment (50), et ladite seconde section périphérique s'étendant axialement sur une seconde hauteur (H2) et étant formée par le matériau du corps de segment (50),
ledit segment de piston (34, 36) ayant un diamètre extérieur de l'ordre de 400 mm à 1000 mm, et
ladite face circonférentielle extérieure (41) saillant radialement avec un premier rayon (R1) qui représente 0,5 à 1,5 fois le diamètre extérieur du segment de piston (34, 36).

2. Segment de piston (34, 36) selon la revendication 1, dans lequel ladite section médiane s'étend sur une hauteur dure (Hc), ladite hauteur dure (Hc) représentant 50 à 75 % de ladite hauteur de segment (Hr).

3. Segment de piston (34, 36) selon l'une quelconque des revendications 1 à 2, dans lequel ladite section médiane est formée par un revêtement dur (52).

4. Segment de piston (34, 36) selon la revendication 3, comportant un revêtement dur pulvérisé (52) sur le corps de segment (50).

5. Segment de piston (34, 36) selon la revendication 3 ou 4, dans lequel l'épaisseur radiale maximale (CT) dudit revêtement dur représente 1,5 % à 4 % de la hauteur de segment (Hr) du segment de piston (34, 36).

6. Segment de piston (34, 36) selon l'une quelconque des revendications 1 à 5, dans lequel ladite première et/ou seconde face latérale (46, 47) est au moins partiellement plaquée de chrome.

7. Segment de piston (34, 36) selon l'une quelconque des revendications 1 à 6, dans lequel la hauteur de segment (Hr) représente 1,4 à 2,5 % du diamètre extérieur du segment.

8. Segment de piston (34, 36) selon l'une quelconque des revendications 1 à 7, dans lequel ladite première dureté est au moins 50 fois supérieure à ladite seconde dureté, mesurée avec un test de dureté Vickers.

9. Segment de piston (34, 36) selon l'une quelconque des revendications 1 à 8, dans lequel ladite première dureté est une dureté Vickers de 350 à 550 HV.

10. Segment de piston (34, 36) selon l'une quelconque des revendications 1 à 9, dans lequel ladite seconde dureté est une dureté Brinell de 200 à 300 HB.

Fig. 1

Fig. 2

Fig. 3

FIG. 4   FIG. 5

FIG. 12

FIG. 9

FIG. 8

FIG. 6

FIG. 7

FIG. 10

FIG. 11

FIG. 13

FIG. 14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102010047836